# EUROPEAN PATENT SPECIFICATION

(11) **EP 1 303 715 B1**
(45) Date of publication and mention of the grant of the patent: **22.03.2006**
(21) Application number: 01953174.8
(22) Date of filing: 26.06.2001
(51) Int. Cl.: F16J 15/44, F16C 27/06, F16C 17/10

(54) **A SEALING DEVICE WITH A FLANGED BUSH**
DICHTUNGSVORRICHTUNG MIT EINER FLANSCHBUCHSE
DISPOSITIF D'ETANCHEITE DOTE D'UNE DOUILLE A REBORD

(30) Priority: 30.06.2000 EP 00202291
(43) Date of publication of application: 23.04.2003
(73) Proprietor: Van Doorne's Transmissie B.V., 5000 AM Tilburg (NL)
(72) Inventor: VAN DER SLUIS, Francis, Maria, Antonius, NL-5271 HP Sint Michielsgestel (NL); VAN SPIJK, Johannes, Gerardus, Ludovicus, Maria, NL-5151 VT Drunen (NL); LAMERS, Hendrikus, Fransiscus, NL-5045 TA Tilburg (NL)
(86) International application number: PCT/EP2001/007172
(87) International publication number: WO 2002/002973

(56) References cited:
- DE-A- 19 611 677
- GB-A- 291 034
- GB-A- 863 527
- GB-A- 891 419
- GB-A- 2 214 993
- US-A- 3 961 798
- US-A- 4 451 048
- US-A- 4 475 736
- US-A- 4 544 167
- US-A- 4 750 847
- US-A- 5 062 259
- US-A- 5 893 565

## Description

The present invention relates to a device, in particular a transmission like a continuously variable transmission, as defined in the preamble of claim 1.

Such devices are generally known, in particular from the field of continuously variable transmissions, e.g. from EP-A-0 924 447. In such known arrangements the rotational part is formed by the shaft of a pulley which is produced hollow so as to convey oil to a pressure chamber of a piston-cylinder assembly with one axially moveable sheave of the pulley so as to urge said sheave to and from the other sheave of the pulley by influencing the hydraulic pressure in said chamber. Such urging of the sheave may realise a radial shift of a belt located and clamped between the sheaves of the pulley and therewith may effect a change in the transmission ratio of the transmission. Moreover, the clamping of the belt enables force transmission between the pulley and the belt through friction.

With a hollow pulley shaft, a connection to such pressure chamber can easily be made by means of a generally applied radial bore in said hollow shaft. In the example provided by said patent publication, in which publication the moveable sheave of the pulley and the associated pressure chamber are not depicted, the stationary pulley part is formed by a pump housing, which is fixedly connected to the transmission housing. The hollow shaft of the pulley extends fittingly over a cylindrical projection of said pump housing. In the cylindrical projection a circumference groove is provided for taking up a sealing ring for sealing off the fitting, i.e. the tolerated radial distance between the two projections, i.e. between the housing and the said hollow shaft respectively. The sealing ring is present to prevent the pump/shaft, more generally denoted the connection parts from excessive leakage of oil from the hollow shaft to the interior of the transmission housing, thus to maintain the function of the hollow shaft to transmit very high pressures to the pressure chamber. In this respect, a sealing ring allowing some oil leakage is in fact welcomed as a desired effect since it provides the bearing with a necessary greasing, i.e. with an oil film, i.e. layer of leaking oil, between the rotational part and the stationary part. The oil film prevents at least excessive contacting of both parts and realises a cooling effect in said parts connection.

Although the known devices such as the example provided above perform satisfactorily, the known construction is prone to improvement. It is known that the sealing ring is prone to wear, whereas the amount of leakage is preferred to be less than currently achievable without expensive sealing rings, thus improving the effectiveness of the pump activity. These aspects of the known construction become especially disadvantageous at high rotational speeds and especially when relatively high pressures are applied, e.g. up to 50 bar or even higher, as is preferred in contemporary transmissions designs. In such circumstances oil leakage appears to increase considerably, even to such an extend that the functioning of the hydraulic system may be hampered. It is an object of the present invention to provide a construction eliminating, at least reducing this disadvantage of the known construction. According to the invention this disadvantage is obviated at least to a large extend when the structural features provided by the characterising portion of claim 1 are applied.

By these features it is realised that the sealing function of the sealing ring is optimised and improved towards a lasting effect thereof by introducing an intermediate element in the form of the sealing bush, all on the basis of the insight that the leakage of oil may be favourably minimised when the sealing bush is properly shaped, i.e. is provided with a flange. With a sealing bush element present between the stationary and the rotational part and the sealing bush having a flange part extending in parallel to an axially mating wall part of the device, in fact an intermediate pressure zone is created in the transition from the space present because of radial play of the axial bush part to the space present because of the axial play of the flange part. By this intermediate pressure zone and the intermediate pressure prevailing therein, it is realised that the gradient of the pressure drop from a pressurised oil compartment to the ambient lowest pressurised environment, e.g. atmospheric pressure at sea level, is significantly reduced. By this reduction of the gradient of the pressure drop the spoilage of oil is correspondingly significantly reduced, while still the greasing function of some oil leakage at very high pressures is maintained. The reduction achieved is based on the principle that the flux along the axial part of the bush depends on the difference between the highest pressure and the intermediate pressure in the intermediate pressure zone. According to an idea underlying the invention, this flux forms the source for a second flux between the intermediate pressure and the lowest pressure compartment. Therefor the latter pressure drop is not determining for the total amount of oil leakage.

The intermediate pressure in turn is in fact realised by the presence of the flange part and by the pressure in the axial gap determined by the same flange and the mating wall part. In this respect, the sealing bush is by the pressure in the pressurised compartment automatically urged away from the pressurised compartment and stopped by the mating transversely extending wall part in the device. Thus the invention advantageously takes advantage of the high pressure, i.e. utilises the high pressure to maintain the same. Full contact between sealing bush and mating wall part should be avoided by allowing oil leakage from the intermediate pressure zone to the housing zone with ambient pressure. The amount of leakage and in fact the intermediate pressure is determined by the radial start and finish of the radial off-let zone for oil as determined by the flange and the mating transverse wall part of the device.

An idea underlying the invention is that the insight that the sealing bush should, so as to realise a proper functioning thereof, be balanced as to the forces working upon it in axial direction. It was also realised in this respect that the intermediate pressure P2 and the dimensioning of the sealing bush play an important role since the difference between P1 and P2 determines the amount of oil flow and since the dimensioning of the flange, more in particular the mating walls, determines the pressure in the axial gap, or rather the decline of pressure therein, and therewith, in combination with the surface area of the mating walls, in practice thus of the flange part, the force acting in axial direction on the flange part of the bush. This latter force, in combination of the force exerted by P2 on the recessed part of the seal work against the force resulting from pressure P1 acting on the axial face of the cylindrical part of the bush, which is directed to the area where P1 prevails, In principle, this balance is completed with the force of pressure P0 acting on the surface of the rear wall of the flange part, in conjunction with the force developed by pressure P1 on the bush. In most cases this force may be neglected, i.e. when the device is operated at sea level and pressure P0 is the atmospheric pressure, therefor zero bar.

An elaboration of the above basic principle underlying the new construction is explained by the following description of favoured embodiments in which, also in accordance with the invention and on the bases of the above explained principle of force balance, a sealing bush defined factor Cp is within a range from 0.90 to 0.975, preferably from 0.92 to 0.95, and in which Cp = (R₂² - R₁²) / (((R₄² - R₃²) / (2*In (R₄/R₃))) - R₁²). Herein, R₁ is the radius of the inner diameter of the axial part of the sealing bush; R₂ is the radius of the outer diameter of the axial part of the sealing bush; R₃ is the radius of the inner diameter of the abutting transverse wall part of the sealing bush, while R₄ is the radius of the outer diameter of the abutting transverse wall part of the sealing bush.

An additional advantage of the current invention is that the sealing ring present between said bearing parts of the device is no longer prone to wear that would otherwise be caused by the rotating device part. Since the sealing bush, which forms an intermediate body between the rotational and the stationary device parts, does not rotate, at least much less than the rotational part of the device during operation, the sealing ring may also favourably perform its sealing function in manner which is not hampered by the rotation of any body to which it rests. In the construction according to the invention, the embodiment of the sealing ring may be chosen for optimal sealing because of the lack in requirement of the sealing bush to rotate.

The invention will now further be explained by way of example according to a drawing in which:
Figure 1 in section represents a part of the bearing between a rotational and a stationary device part, in which bearing a sealing bush is incorporated in accordance with the invention;
Figure 2 provides a set of three possible embodiments of the sealing bush according to the invention;
Figure 3 is an example of an alternative application of the basic principle of the idea underlying the invention; and
Figure 4 in sectional view represents an example of a transmission known per se in which the structural features according to the invention are incorporated.

In the drawing, corresponding structural features are referred to by the equal reference numbers.

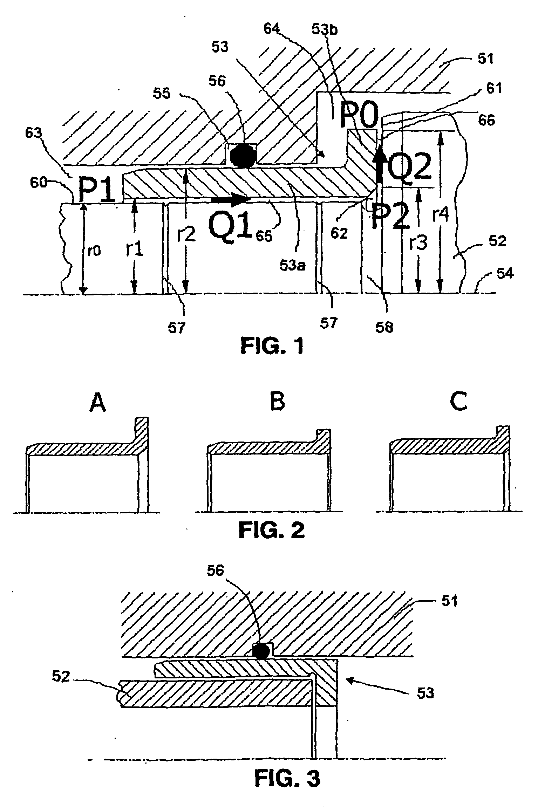

Figure 1 in a partly sectional view depicts part of a device with, in section, a stationary part 51, in plan view a rotational part 52, in sectional view a sealing bush 53, a central axis 54 of the rotational part 52 and the sealing bush 53, a circumference groove 55 provided in the stationary part 51, a sealing ring 56 provided in the groove between the stationary part and the sealing bush 53 in a sealing manner. The rotational part, in the cylindrical section overlapping with a cylindrical part of the sealing bush 53 is provided with at least one, preferably a pair of circumference grooves 57 of relatively small depth and width. Preferably the depth and width of a groove 57 is within the range from 0.5 to 2 times the radial play between the diameter of the outer circumference of a local section of the rotational part 52 and the inner diameter (= two times the radius r1 thereof) of the sealing bush 53. Such grooves enhance the stable orientation of the bush, and therewith its functioning by enhancing that oil and the hydraulic pressure may quickly be present throughout the radial space 65.
At the transition between the cylindrical section 60 of the rotational part 52 and the radially outwardly extending wall part 61 thereof, a circumference groove 58 of significantly larger dimension is preferably provided. Preferably, the groove allows the mating wall 61 to extend below the radius r0 of the outer circumference of the cylindrical projection 60 of the rotating part 52. In this manner contact between the bush 53 and the rotating part 52 due to unfortunate tolerances in the corner area is prevented in a secure and favourable manner, since the presence of the groove 58 provides a room 62 where oil may be buffered at pressure P2, which is favourable for securing the proper functioning of the bush 53.

In the device according to figure 1, the cylindrical projection 60 of the rotational part 52 bears in a cylindrical section of the stationary part 1. The rotational part 52 may be provided hollow to conduct an oil flow. In this device, an oil compartment 63 in the stationary part 1 is sealed off from oil leakage from an oil compartment 64, e.g. a space within the housing of a transmission. In the oil compartment 63 an oil pressure P1 exists, e.g. 50 bar, created by an oil pump not depicted in figure 1, in a manner known per se. In space 64 there is ambient pressure P0, e.g. 0 bar when the device is operated at sea level. A pressure P2 exists at the location where the radial space between the bush 53 and the rotating part 52 ends, and where the axial flux of oil Q1 is redirected in radial directed in radial direction to become flux Q2 at r3, i.e. where the axial gap and space 66 between the mating walls 61, 53b starts.

Between the cylindrical projection 60 of the rotational part 52, which has a radius r0 and the inner circumference wall of the cylindrical part of the sealing bush 53, which has a radius r1, slightly larger than r0, there is a radial space 65 created by the radial play defined by the difference in magnitude between r1 and r0. By the pressure P1 in space 63, e.g. the inner room of a hollow shaft, the sealing bush 53 is urged towards the radially extending wall 61 of the rotational part 52. Between the flange part 53b of the sealing bush 53, extending in parallel to the wall 11, and the wall 61, there remains a small axial space 66 forced by the oil flux Q2 from the intermediate oil space 62 to the environmental space 64. The oil flux Q2 of course requires an oil flux Q1 from space 63 to intermediate oil space 12. The flange part of sealing bush 53 is characterised by a start of the axial space 66 at radius r3 and the end thereof at radius r4. It is supposed that at least one of the mating walls of the flange and of the wall 61 start and end at these levels r3 and r4 respectively. Preferably, the determination of r3 and r4 is done at the sealing bush side while the wall 61 remains transverse over its entire length. This, in accordance with the invention is because the sealing bush is easier to adapt or to replace.

The larger the difference in pressure level between P1 and P2, the larger the oil leakage through radial oil space 65 will be. It is thus obviated to minimise this difference. The exact level of pressure in P2 and the exact amount of leakage and axial distance between the flange 53B and wall 61 is determined by the axial distance of radial space 65 and of the level of r3 and r4 respectively as will be explained by the following. In any case, the r3 is equal to or larger than r1 and r4-r3 is preferably smaller than the axial length of radial space 65.

The invention advantageously realises a dimensioning of the sealing bush 53 based on a defined balance of the various pressure forces acting on the surfaces of the sealing bush 53. In this respect the pressure force generated by P1 works against the pressure force generated by pressure P2 and the pressure force in the axial space 66, which latter decreases from pressure P2 at radius r3 to pressure P0 at radius r4, i.e. in radial outward direction. Once it has become clear that the functioning as well as the dimensioning of the sealing bush 53 should be determined by equalising the various pressure forces acting on it, the mathematical relation between P1 and P2 is achieved by applying the ordinary physical law formulas in the ordinary manner as is known to the man skilled in the art.

For example, for applications at sea level and with pressure P0 being atmospheric pressure at sea level, i.e. zero bar, as will most often be the case in most of the probable applications of the device, the above described force balance renders a relatively simple relation between P1 and P2: ${C}_{P} = \frac{{r}_{2}^{2} - {r}_{1}^{2}}{\frac{{r}_{4}^{2} - {r}_{3}^{2}}{2 ⋅ ln ( \frac{{r}_{4}}{{r}_{3}} )} - {r}_{1}^{2}}$
This deduction of the pre-mentioned balance demonstrates that for the purpose of theoretically indicating the gain in reduction of losses in leakage for different designs of the sealing bush according to the invention, the relationship between P1 and P0 may be considered to be purely based on geometrical properties of the construction. This renders it possible at fine tuning the construction according to the invention, to design the construction independent of temperature, leakage, pressure level and sealing bush length. The values for r1 - r4 may be calculated departing from a standard flux formula for calculating the flux through radial space 65. Such a formula may take into account the length and height, i.e. r1-r0, of the radial space 65, the oil viscosity and a shaft eccentricity factor. In this manner, an estimate of the oil flux Q1, to be considered equal to oil flux Q2, may be gained. It shows in practice that the leakage values thus obtained are on the low side, probably because the standard flux calculating formulas can not take account of a probable effect of the rotation of rotational part 52. However, such a deviation does not influence the pressure difference P1-P2 and the drop in leakage obtained by a reduction of P1-P2 remains proportional.

Figure 2, from left to right in the picture provides some design examples A, B, C of a sealing bush 53 for the construction according to the invention. To indicate the relative differences that may be optioned by designing such sealing bush in accordance with the Cp factor the following table of calculated outcomes is provided.

| | | | ***Mean radial play*** | | ***Maximum radial play*** | |
|---|---|---|---|---|---|---|
| **Example** | **Radii** | **Pressure P2 [bar]** | **Leakage[litre/min]** | **Axial gap [Micron]** | **Leakage[litre/min]** | **Axial gap [Micron]** |
| | ***r1= 10.0*** | | | | | |
| ***A*** | ***r2= 12.0*** | 23.43 | 0.140 | 12.51 | 0.490 | 18.92 |
| | ***r3= 11.5*** | | | | | |
| | ***r4= 16.5*** | | | | | |
| | ***r1= 10.0*** | | | | | |
| ***B*** | ***r2= 12.0*** | 48.97 | 0.020 | 5.01 | 0.068 | 7.58 |
| | ***r3= 10.2*** | | | | | |
| | ***r4= 14.2*** | | | | | |
| | ***r1= 10.0*** | | | | | |
| ***C*** | ***r2=* 12.6** | 46.02 | 0.021 | 5.02 | 0.074 | 7.60 |
| | ***r3= 10.9*** | | | | | |
| | ***r4= 14.8*** | | | | | |

The table comprises a mean play and a maximum play, the latter, being calculated on the bases of a desired manufacturing tolerance. The minimum play due to this tolerance is left out for sake of simplicity. The table demonstrates that relative to design A, a significant effect in reducing the pressure difference P1-P2 may be achieved by increasing the thickness of the sealing bush and by decreasing the radial height of axial space 66. Should the thickness of the sealing bush 53 not be increased as exemplified by design C, than a further reduction of the height of axial gap 66 is desired for a comparable effect.

Figure 3 is another example of an application of the basic principle of the idea underlying the current invention. Of course the formula Cp will have to be adapted to the different circumstance in which P1 acts on the radial inner side of the axial space between sealing bush 53 and rotational part 52. Proper functioning of this sealing bush is realised when pressure P0 is relatively high in relation to the higher pressure P1 or when the active surface of P2 is increased, e.g. by realising a recess in the flange part of the bush, connecting to the area where the mating of the radial wall parts ends, i.e. where the radial flux transits in axial direction. This principle of enlarging the operating area of P2 may also be applied in the previous example.

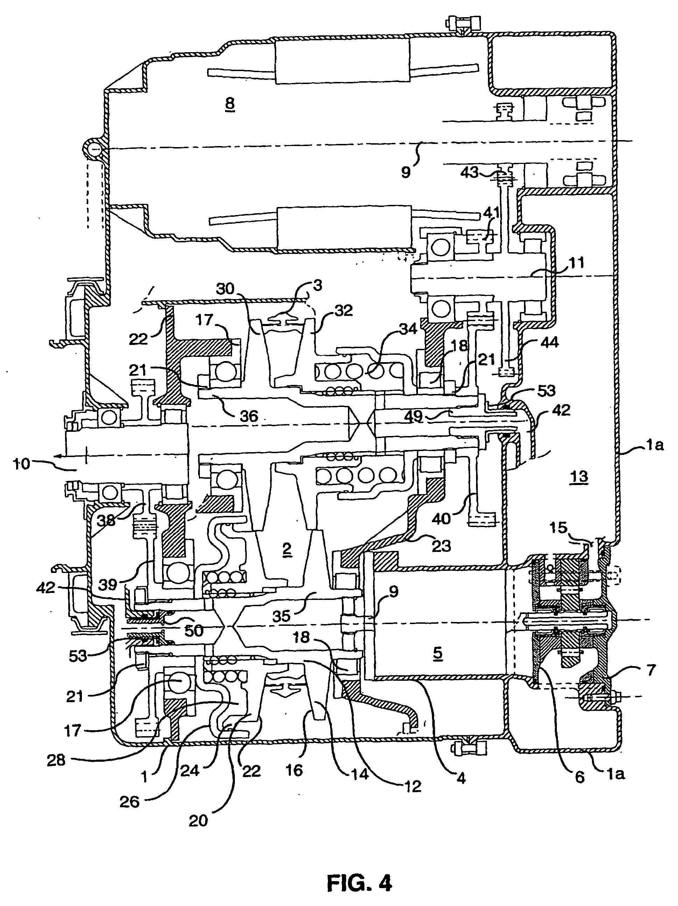

Figure 4 in sectional view provides an example of a continuous variable transmission, in cause driving an electrical generator 8. However, such transmission may equally be applied in e.g. a personal vehicle. In this example an endless belt 2 runs between sheaves 20 and 14, and 30 and 32 of a each respective pulley of a set of pulleys incorporated in a closed transmission housing 1, 1 a. One sheave 20, 32 is provided axially moveable and may be urged to an axially fixed sheave 14, 30 by hydraulic pressure P1 generated in pressure chambers 28, 34 which together with the moveable sheave 20, 32 are each part of a piston-cylinder assembly. The pressure chambers 28, 43 are hydraulically fed by a pump 6, which via a lead 15, 42 forming the stationary part 51 in the previous drawing, and partly not shown in the figure, enters a hollow shaft 35, 36 of the respective pulleys. In the hollow shaft 35, 36 there is provided a radial bore entering the pressure chamber 28, 34. At both pulleys the shaft 35, 36 is provided with an extension 49, 50 rotationally fixed to the respective pulley, for adapting the diameter and connecting to the lead 15, 42, which here form the stationary part 51 as described in the preceding drawings.

It will be evident from the explanation and examples provided that the construction according to the invention may even further be improved by optimising the geometry of the sealing bush according to the invention, using the newly developed pressure factor Cp, so as to come to a minimisation of leakage in a rotating seal construction. The factor Cp should be maintained close to 1, however preferably lower than 0.975 to maintain good cooling performance and to prevent wear of the sealing bush at the axial space 61.

As to the balance of forces set up at designing the sealing bush 53, it may be noticed that in theory, the sealing ring could influence this balance. It appears however that the bush 53 in practice assumes a stable balanced condition in which the influence of the sealing ring may be neglected. The invention renders it possible to reduce the fabricating costs of the know device since it is now relatively easy to provide the groove 55 for the sealing 56 in the sealing bush, which for this reason of economy would be the preferred embodiment

More in detail, figure 4 is described as follows. The electric generator shown in figure 4 comprises a housing 1 with lid part 1a, which encloses a continuously variable transmission generally designated 2, utilising a belt/pulley drive known per se, a low pressure pump 4, a high pressure pump 6, a generator, generally designated 8, and an oil system disposed throughout the housing 1.

The transmission 2 utilises a metal belt 3 and enables the variable speed of an input shaft 10 which receives a drive from a spool of e.g. a gas turbine engine or a windmill to be converted to a near constant speed such that the generator 8 can be run at a near constant speed. The transmission is in automotive vehicles applied with reversed function, i.e. to keep constant as much as possible the vehicles engine, while varying the wheel speed. In order to do this, a first shaft 35 of the belt drive mechanism carries a flange 14 which defines an inclined surface 16 against which a drive belt 3 bears. The shaft 35 also carries a co-axially disposed movable flange 20 drivingly connected to the shaft 35 via a spline portion (not shown). The movable flange 20 defines a further inclined surface 22 facing towards the surface 16, which surfaces serve to define a V-shaped channel whose width can be varied by changing the axial position of the flange 20 with respect to the fixed flange 14. The flange 20 has a circularly symmetric wall 24 extending towards and co-operating with a generally cup shaped element 26 carried on the shaft 35 to define a first hydraulic chamber 28 there between which is in fluid flow communication via a control duct (not shown) with an associated control valve. Similarly, a fixed flange 30 and a movable flange 32 are associated with a second shaft 36 and are associated with a second hydraulic control chamber 34. A steel segmented belt having a cross-section in the form of trapezium, with the outer most surface being wider than the inner most surface is used to interconnect the first and second variable ratio pulleys formed between the pairs of fixed movable flanges 14, 20; 30, 32, respectively, in order to drivingly connect the flanges 14, 20; 30, 32. The shaft 35 is in geared driving connection with the input shaft 10 via a step down gear, and the shaft 36 is connected to the generator 8 via a compound step up gear 40, 41, 44, 43.

The position of each movable flange 20; 32 with respect to the associated fixed flange 14; 30 is controlled by the hydraulic actuators formed by each movable flange 20; 32 and its associated hydraulic chambers 28, 34. Since the interconnecting belt 3 is of a fixed width, moving the flanges 14, 20; 30, 32 closer together forces the belt 3 to take a path of increased radial distance. The interconnecting belt 3 has a fixed length, and consequently as one movable flange 20; 32 is moved towards its associated fixed flange 14; 30, the other movable flange 32; 20 must move away from its associated fixed flange 30; 14, in order for the path from an arbitrary starting point, around one of the pulleys, to the second pulley, around the second pulley and back to the fixed arbitrary starting point to remain a constant distance.

A control system, an electric control unit (not shown) co-ordinating and controlling the hydraulic control means 28 and 34 and three hydraulic pumps (not shown) is provided for controlling both the drive ratio and the compressive load exerted on the belt, otherwise dented pinching force.

The assembly of a set of pulleys and a belt basically forming a continuous variable transmission, in the following the assembly of the first and second pulley, the structures defining hydraulic chambers 34 and 28, the bearings 17, 18, 19, the nuts 21 bolting together these elements on the respective pulley shafts 36, 35 and the belt 3 mounted between said pulleys will be generally denoted variator structure. In combination with said control means for controlling the transmission ratio varying function; in this case, the electro-hydraulic control means the variator structure is denoted variator. The variator structure is mounted to a variator base plate 22, which is inserted into the housing 1 and fixed thereto, with the variator structure mounted thereon. To the axially opposite side the variator structure is supported by a second variator support plate 23, equally supporting the respected shafts to the 35 and 36 by bearings 18. At assembly of the transmission, the second support plate 23 preferably forms part of the variator structure mentioned before.

Both support plates 22 and 23 are provided with an opening for supporting an intermediary shaft, input shaft 10; and intermediary and transmission output shaft 11 respectively. Shaft 11 to its opposite side is supported by the housing 1. The transmission input shaft 10 carries a gear wheel 38 meshing in a speed reducing manner with a gear wheel 39 mounted to the shaft 35 and located on the opposite side of support plate 22 relative to the pulley assembly. In the depicted embodiment, the gear 39 is favourably mounted to the shaft 35 by a flange part supporting the bearing 17 of the first shaft 35. The counter side of the second variator support plate 23 a gear 40 is mounted to the shaft 36 meshing with gear 44 on intermediary shaft 11.

The lid part 1a closes the variator section of the housing and provides a hydraulic access opening 42. It also contains support parts for the intermediary shaft 11 and the generator shaft 9. The lid part 1a of the current embodiment is produced with a bay structure 5, co-axially linking up with the primary shaft 35. Bay 5 is produced for receiving several pumps disposed aside one another with, a common drive shaft connected to the primary drive via shaft part 9. The bay 5 is produced with a separate lid part 7, allowing easy access and removal in case of failure of a pump. In the current embodiment; the highest-pressure pump 6 is located closest to the lid 7. Bay, 5 connects to a separated oil bay 13 via a hydraulic opening 15.

The invention apart from the following claims also relates to the preceding description and all details and aspects in the drawing which may not be described but which are directly and unambiguously derivable therefrom by a man skilled in the art.

## Claims

1. Device, in particular a transmission like a continuously variable transmission, comprising a stationary part (51) and a rotational part (52), each having an oil compartment (63; 64), a cylindrical projection (60) of either one stationary and rotational part (52, 51) extending into a cylindrical opening of the other part (51, 52), forming an oil passage (65, 62, 66) from the one compartment (63, 64) to the other, a sealing bush element (53) being present between the stationary (51) and the rotational part (52), the sealing bush (53) having an axially extending part and a flange part (53b), at least one side face of which.flange part extends in parallel to a radially extending, wall part (61) of the rotational part (52), extending transverse to the cylindrical projection (60) of the rotational part (52) of the device, a sealing ring (56) being located in a circumference groove (55) of the device and incorporated between the stationary part (51) and the sealing bush element (53), **characterised in that** an oil buffering room (62) is present in the transition from the space (65) between the axially extending part of the sealing bush (53) and the cylindrical projection (60), to the space (66) between the radially extending wall part (61) of the rotational part and said side face of the flange part (53b) of the sealing bush (53) , at which room (62) the oil passage (65, 62, 66) is widened with respect to another part of the oil passage (65, 66).

2. Device according to claim 1, **characterised in that** the sealing ring (55) is incorporated in the device between the stationary part (51) and the sealing bush (53), sealing the radial play between said latter two parts by preventing a passage of oil.

3. Device according to claim 1 or 2, **characterised in that** a sealing bush (53) defined factor Cp is within a range from 0.90 to 0.975, preferably from 0.92 to 0.95, with: $Cp = ( {{r}_{2}}^{2} - {{r}_{1}}^{2} ) / ( ( ( {{r}_{4}}^{2} - {{r}_{3}}^{2} ) / ( 2 ∗ ln ( {r}_{4} / {r}_{3} ) ) ) - {{r}_{1}}^{2} ) ,$
wherein:
r₁ = the radius of the inner diameter of the axial part of the sealing bush;
r₂ = the radius of the outer diameter of the axial part of the sealing bush;
r₃ = the radius of the inner diameter of the abutting transverse wall part of the sealing bush;
r₄ = the radius of the outer diameter of the abutting transverse wall part of the sealing bush;

4. Device according to any one of the preceding claims, **characterised in that** the sealing bush (53) extends closely fitting to the projecting part (50), such that radial play between a stationary and/or rotational part (51, 52) and the sealing bush (53) is larger than thrice the average material surface roughness of the sealing bush (53), and smaller than half, preferably smaller than a quarter of the radial thickness of the sealing bush (53).

5. Device according to any one of the preceding claims, **characterised in that** the axial length of the space (55) between the axially extending parts of the rotational part (52) and the sealing bush (53) is larger than the radial length (r₄-r₃) of the space (66) between the transversely extending wall parts (3b, 61).

6. Device according to any one of the preceding claims, **characterised in that** the buffer room (52) between the sealing bush (53) and the rotational part (52) is at least partly realised by a recess of the sealing bush (53) at the transition from axial oil flux (Q1) to radial oil flux (Q2), e.g. in the form of a chamfer, a fillet or a bore in the sealing bush (53).

7. Device according to any one of the preceding claims, **characterised in that** the buffer room (62) is at least partly realised by one of a groove (58) in the rotational part (52) and a recess in the sealing bush (53), at least partly realised in the projected corner between the axially extending wall part (50) of the rotational part and the transversely extending wall part (51) thereof.

8. Device according to any one of the preceding claims **characterised in that** at least one circumference groove (57), but preferably two circumference grooves are provided in the cylindrical projection of the rotational part extending within the range of overlap (55) with the cylindrical part (53a) of the sealing bush (53).

9. Device according to any one of the preceding claims, **characterised in that** the sealing ring (56) is at least within a tolerance of 10%, located half way the entire axial length of the sealing bush (53), given that the latter virtually contacts the radial wall of the rotating part (52).

10. Device according to any one of the preceding claims, **characterised in that** the sealing ring (56) is located between the location half way the entire axial length of the sealing bush (53) and the flange thereof, when the sealing bush (53) virtually contacts the radial wall of the rotating part (52).

11. Device according to any one of the preceding claims, **characterised in that** the groove (55) for receiving a sealing ring (56) is provided in the sealing bush (53),

12. Transmission provided with a device according to any one of the preceding claims.

## Patentansprüche

1. Vorrichtung, insbesondere eine Kraftübertragung wie eine stufenlose Kraftübertragung, die ein stationäres Teil (51) und ein drehbares Teil (52) mit jeweils einer Ölkammer (63; 64), einen zylindrischen Vorsprung (60) des stationären Teils und des drehbaren Teils (52, 51), der sich in eine zylindrische Öffnung des anderen Teils (51, 52) erstreckt, um einen Öldurchgang (65, 62, 66) von der einen Kammer (63, 64) zur anderen zu bilden, sowie ein zwischen dem stationären (51) und dem drehbaren Teil (52) befindliches Dichtungsbuchsenelement (53) umfaßt, wobei die Dichtungsbuchse (53) ein sich axial erstreckendes Teil (53a) und ein Flanschteil (53b) hat, das sich quer zum zylindrischen Vorsprung (60) des drehbaren Teils (52) der Vorrichtung erstreckt, wobei sich mindestens eine Seitenfläche des Flanschteils (53b) parallel zu einem sich radial erstreckenden Wandteil (61) des drehbaren Teils (52) erstreckt und ein Dichtungsring (56) sich in einer zwischen dem stationären Teil (51) und dem Dichtungsbuchsenelement (53) eingefügten Umfangsnut (55) der Vorrichtung befindet, **dadurch gekennzeichnet, daß** sich ein Ölpufferraum (62) im Übergang vom Raum (65) zwischen dem sich axial erstreckenden Teil (53a) der Dichtungsbuchse (53) und dem zylindrischen Vorsprung (60) zu dem zwischen dem sich radial erstreckenden Wandteil (61) des drehbaren Teils (52) und der Seitenfläche des Flanschteils (53b) der Dichtungsbuchse (53) befindlichen Raum (66) befindet, wobei an diesem Raum (62) der Öldurchgang (65, 62, 66) im Verhältnis zu einem anderen Teil des Öldurchgangs (65, 66) aufgeweitet ist.

2. Vorrichtung nach Anspruch 1, **dadurch gekennzeichnet, daß** der Dichtungsring (55) in der Vorrichtung zwischen dem stationären Teil (51) und der Dichtungsbuchse (53) eingefügt ist, wobei das radiale Spiel zwischen den beiden letzteren Teilen **dadurch** abgedichtet ist, daß ein Öldurchgang verhindert wird.

3. Vorrichtung nach Anspruch 1 oder 2, **dadurch gekennzeichnet, daß** ein für die Dichtungsbuchse (53) definierter Faktor Cp innerhalb eines Bereichs von 0,90 bis 0,975 und vorzugsweise zwischen 0,92 und 0,95 liegt, wobei die Formel wie folgt lautet: $Cp = ( {{r}_{2}}^{2} - {{r}_{1}}^{2} ) / ( ( ( {{r}_{4}}^{2} - {{r}_{3}}^{2} ) / ( 2 * In ( {r}_{4} / {r}_{3} ) ) ) - {{r}_{1}}^{2} ) ,$
wobei:
r₁ = der Radius des Innendurchmessers des axialen Teils der Dichtungsbuchse;
r₂ = der Radius des Außendurchmessers des axialen Teils der Dichtungsbuchse;
r₃ = der Radius des Innendurchmessers des angrenzenden querverlaufenden Wandteils der Dichtungsbuchse;
r₄ = der Radius des Außendurchmessers des angrenzenden querverlaufenden Wandteils der Dichtungsbuchse.

4. Vorrichtung nach einem der vorstehend aufgeführten Ansprüche, **dadurch gekennzeichnet, daß** sich die Dichtungsbuchse (53) in enger Passung zum vorspringenden Teil (50) so erstreckt, daß das radiale Spiel zwischen einem stationären und/oder einem drehbaren Teil (51, 52) und der Dichtungsbuchse (53) größer als die dreifache durchschnittliche Materialoberflächenrauheit der Dichtungsbuchse (53) und kleiner als die Hälfte, vorzugsweise kleiner als ein Viertel, der radialen Dicke der Dichtungsbuchse (53) ist.

5. Vorrichtung nach einem der vorstehend aufgeführten Ansprüche, **dadurch gekennzeichnet, daß** die axiale Länge des Raums (55) zwischen den sich axial erstreckenden Teilen des drehbaren Teils (52) und der Dichtungsbuchse (53) größer als die radiale Länge (r₄ - r₃) des Raums (66) zwischen den sich quer erstreckenden Wandteilen (3b, 61) ist.

6. Vorrichtung nach einem der vorstehend aufgeführten Ansprüche, **dadurch gekennzeichnet, daß** der Pufferraum (52) zwischen der Dichtungsbuchse (53) und dem drehbaren Teil (52) mindestens teilweise durch einen Rücksprung der Dichtungsbuchse (53) am Übergang vom axialen Ölstrom (Q1) zum radialen Ölstrom (Q2) z.B. in der Form einer Abfasung, einer Ausrundung oder einer Bohrung in der Dichtungsbuchse (53) realisiert ist.

7. Vorrichtung nach einem der vorstehend aufgeführten Ansprüche, **dadurch gekennzeichnet, daß** der Pufferraum (62) mindestens teilweise entweder durch eine Nut (58) im drehbaren Teil (52) oder durch einen Rücksprung in der Dichtungsbuchse (53) realisiert ist, was mindestens teilweise in der vorspringenden Ecke zwischen dem sich axial erstreckenden Wandteil (50) des drehbaren Teils und dem sich quer erstreckenden Wandteil (51) davon realisiert ist.

8. Vorrichtung nach einem der vorstehend aufgeführten Ansprüche, **dadurch gekennzeichnet, daß** mindestens eine Umfangsnut (57), vorzugsweise jedoch zwei Umfangsnuten im zylindrischen Vorsprung des sich innerhalb des Bereichs der Überlappung (55) mit dem zylindrischen Teil (53a) der Dichtungsbuchse (53) erstreckenden drehbaren Teils vorgesehen sind.

9. Vorrichtung nach einem der vorstehend aufgeführten Ansprüche, **dadurch gekennzeichnet, daß** sich der Dichtungsring (56) mindestens innerhalb einer Toleranz von 10% auf halber Strecke der gesamten axialen Länge der Dichtungsbuchse (53) befindet, vorausgesetzt, daß die Letztgenannte tatsächlich die radiale Wand des drehbaren Teils (52) berührt.

10. Vorrichtung nach einem der vorstehend aufgeführten Ansprüche, **dadurch gekennzeichnet, daß** sich der Dichtungsring (56) zwischen der auf halber Strecke der axialen Länge der Dichtungsbuchse (53) liegenden Stelle und dem Flansch davon befindet, wenn die Dichtungsbuchse (53) tatsächlich die radiale Wand des drehbaren Teils (52) berührt.

11. Vorrichtung nach einem der vorstehend aufgeführten Ansprüche, **dadurch gekennzeichnet, daß** die Nut (55) zur Aufnahme eines Dichtrings (56) in der Dichtungsbuchse (53) vorgesehen ist.

12. Kraftübertragung, die mit einer Vorrichtung nach einem der vorstehend aufgeführten Ansprüche ausgestattet ist.

## Revendications

1. Dispositif, en particulier transmission telle qu'une transmission à variation continue, comprenant une partie stationnaire (51) et une partie rotative (52), comprenant chacune un compartiment d'huile (63; 64), une saillie cylindrique (60) de chacune des parties stationnaire et rotative (52, 51) s'étendant dans une ouverture cylindrique de l'autre partie (51, 52), formant un passage d'huile (65, 62, 66) d'un compartiment (63, 64) à l'autre, un élément de douille d'étanchéité (53) étant prévu entre la partie stationnaire (51) et la partie rotative (52), la douille d'étanchéité (53) présentant une partie s'étendant axialement (53a) et une partie de rebord (53b) s'étendant transversalement à la saillie cylindrique (60) de la partie rotative (52) du dispositif, au moins une face latérale de ladite partie de rebord (53b) s'étendant parallèlement à une partie de paroi s'étendant radialement (61) de la partie rotative (52), un anneau d'étanchéité (56) étant placé dans une rainure circonférentielle (55) du dispositif incorporé entre la partie stationnaire (51) et l'élément de douille d'étanchéité (53), **caractérisé en ce qu'**une chambre d'huile intermédiaire (62) est prévue dans la transition entre l'espace (65) entre la partie s'étendant axialement (53a) de la douille d'étanchéité (53) et la saillie cylindrique (60), et l'espace (66) entre la partie de paroi s'étendant radialement (61) de la partie rotative (52) et ladite face latérale de la partie de rebord (53b) de la douille d'étanchéité (53), chambre (62) à laquelle le passage d'huile (65, 62, 66) est élargi par rapport à une autre partie du passage d'huile (65, 66).

2. Dispositif selon la revendication 1, **caractérisé en ce que** l'anneau d'étanchéité (55) est incorporé dans le dispositif entre la partie stationnaire (51) et la douille d'étanchéité (53), obturant le jeu radial entre cesdites deux dernières parties en empêchant tout passage d'huile.

3. Dispositif selon la revendication 1 ou 2, **caractérisé en ce qu'**un facteur Cp défini pour la douille d'étanchéité (53) est compris dans une gamme allant de 0,90 à 0,975, de préférence entre 0,92 et 0,95, avec: $Cp = ( {{r}_{2}}^{2} - {{r}_{1}}^{2} ) / ( ( ( {{r}_{4}}^{2} - {{r}_{3}}^{2} ) / ( 2 ∗ ln ( {r}_{4} / {r}_{3} ) ) ) - {{r}_{1}}^{2} ) ,$
où:
r₁ = le rayon du diamètre intérieur de la partie axiale de la douille d'étanchéité;
r₂ = le rayon du diamètre extérieur de la partie axiale de la douille d'étanchéité;
r₃ = le rayon du diamètre intérieur de la partie de paroi transversale attenante de la douille d'étanchéité; et
r₄ = le rayon du diamètre extérieur de la partie de paroi transversale attenante de la douille d'étanchéité.

4. Dispositif selon l'une quelconque des revendications précédentes, **caractérisé en ce que** la douille d'étanchéité (53) s'étend en ajustement étroit avec la partie saillante (50), de telle sorte que tout jeu radial entre une partie stationnaire et/ou rotative (51, 52) et la douille d'étanchéité (53) soit plus grand que trois fois la rugosité moyenne de la surface de la matière de la douille d'étanchéité (53), et plus petit que la moitié, de préférence plus petit qu'un quart de l'épaisseur radiale de la douille d'étanchéité (53).

5. Dispositif selon l'une quelconque des revendications précédentes, **caractérisé en ce que** la longueur axiale de l'espace (55) entre les parties s'étendant axialement de la partie rotative (52) et de la douille d'étanchéité (53) est plus grande que la longueur radiale (r₄-r₃) de l'espace (66) entre les parties de paroi s'étendant transversalement (3b, 61).

6. Dispositif selon l'une quelconque des revendications précédentes, **caractérisé en ce que** la chambre intermédiaire (62) entre la douille d'étanchéité (53) et la partie rotative (52) est au moins en partie réalisée par un évidement de la douille d'étanchéité (53) à la transition entre un flux d'huile axial (Q1) et un flux d'huile radial (Q2), par exemple sous la forme d'un chanfrein, d'un congé ou d'un alésage dans la douille d'étanchéité (53).

7. Dispositif selon l'une quelconque des revendications précédentes, **caractérisé en ce que** la chambre intermédiaire (62) est au moins en partie réalisée soit par une rainure (58) dans la partie rotative (52), soit par un évidement dans la douille d'étanchéité (53), au moins partiellement réalisé dans le coin saillant entre la partie de paroi s'étendant axialement (50) de la partie rotative et la partie de paroi s'étendant transversalement (51) de celle-ci.

8. Dispositif selon l'une quelconque des revendications précédentes, **caractérisé en ce qu'**au moins une rainure circonférentielle (57), mais de préférence deux rainures circonférentielles sont prévues dans la saillie cylindrique de la partie rotative s'étendant à l'intérieur de la plage de recouvrement (55) avec la partie cylindrique (53a) de la douille d'étanchéité (53).

9. Dispositif selon l'une quelconque des revendications précédentes, **caractérisé en ce que** l'anneau d'étanchéité (56) est, avec au moins une tolérance de 10 %, situé à la moitié de la longueur axiale totale de la douille d'étanchéité (53), étant donné que cette dernière entre virtuellement en contact avec la paroi radiale de la partie rotative (52).

10. Dispositif selon l'une quelconque des revendications précédentes, **caractérisé en ce que** l'anneau d'étanchéité (56) est situé entre la position médiane sur la longueur axiale totale de la douille d'étanchéité (53) et le rebord de celle-ci, lorsque la douille d'étanchéité (53) entre virtuellement en contact avec la paroi radiale de la partie rotative (52).

11. Dispositif selon l'une quelconque des revendications précédentes, **caractérisé en ce que** la rainure (55) destinée à recevoir un anneau d'étanchéité (56) est pratiquée dans la douille d'étanchéité (53).

12. Transmission équipée d'un dispositif selon l'une quelconque des revendications précédentes.
